(19) Europäisches Patentamt
European Patent Office
Office européen des brevets

(11) **EP 3 322 277 B1**

(12) **FASCICULE DE BREVET EUROPEEN**

(45) Date de publication et mention
de la délivrance du brevet:
**05.06.2019 Bulletin 2019/23**

(51) Int Cl.:
***A01B 63/00*** *(2006.01)*   ***A01D 47/00*** *(2006.01)*

(21) Numéro de dépôt: **16741580.1**

(22) Date de dépôt: **12.07.2016**

(86) Numéro de dépôt international:
**PCT/EP2016/066536**

(87) Numéro de publication internationale:
**WO 2017/009334 (19.01.2017 Gazette 2017/03)**

(54) **SYSTÈME ROBOTIQUE À DEUX BRAS POUR L'AJUSTEMENT DE LA HAUTEUR D'UN OUTIL AGRICOLE**

ZWEIARMIGES ROBOTERSYSTEM ZUR HÖHENVERSTELLUNG EINES LANDWIRTSCHAFTLICHEN WERKZEUGS

TWO-ARMED ROBOTIC SYSTEM FOR ADJUSTING THE HEIGHT OF AN AGRICULTURAL TOOL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2015 FR 1556701**

(43) Date de publication de la demande:
**23.05.2018 Bulletin 2018/21**

(73) Titulaire: **Commissariat à l'Énergie Atomique et aux Énergies Alternatives
75015 Paris (FR)**

(72) Inventeurs:
• **BRIQUET-KERESTEDJIAN, Nolwenn**
**75014 Paris (FR)**
• **COLLEDANI, Frédéric**
**91300 Massy (FR)**
• **DUISSARD, Christophe**
**63119 Chateaugay (FR)**
• **LELONG, Baptiste**
**63730 Les Martres de Veyre (FR)**
• **THEALLIER, Delphin**
**63540 Romagnat (FR)**

(74) Mandataire: **Brevalex
95, rue d'Amsterdam
75378 Paris Cedex 8 (FR)**

(56) Documents cités:
**EP-A1- 2 852 272        AU-A- 5 387 473
FR-A1- 2 632 486        GB-A- 2 495 497
US-A- 4 183 411        US-A- 4 197 691
US-A1- 2012 304 610**

**Description**

**DOMAINE TECHNIQUE**

Le domaine de l'invention est celui des systèmes robotiques agricoles. L'invention vise plus particulièrement un système permettant d'ajuster automatiquement la position d'un outil agricole, tel qu'un outil de coupe ou d'arrachage de végétaux. Elle trouve en particulier application dans l'automatisation des opérations de castration mécanique des champs de production de maïs semence.

**ÉTAT DE LA TECHNIQUE ANTÉRIEURE**

Le maïs est une plante autogame fortement soumise à l'effet d'hétérosis, c'est-à-dire à l'amélioration des capacités et de la vigueur de la plante sous forme hybride ou hétérozygote par rapport à la plante sous forme homozygote. Le travail des sélectionneurs consiste schématiquement à croiser des lignées génitrices homozygotes afin d'obtenir une combinaison hybride qui sera plus productive et plus vigoureuse et présentera des caractéristiques agronomiques intéressantes.

La plante de maïs est monoïque, constitué d'une inflorescence mâle, appelée panicule, qui se trouve au sommet de la plante et est responsable de l'émission de pollen, et d'une inflorescence femelle se situant à mi-hauteur de la plante, à la base d'une feuille. L'inflorescence femelle est composée de stigmates ou soies réceptrices qui seront fécondées par le pollen, et conduiront à la formation de l'épi.

La production de semence hybride est réalisée en cultivant dans une même parcelle, généralement sur des lignes intercalées, des plantes des deux lignées parentes de l'hybride. La panicule de la lignée génitrice femelle est écimée avant floraison pour que ces plantes soient fécondées par le pollen de la lignée génitrice mâle. Les épis récoltés sur cette lignée génitrice femelle portent ainsi les grains hybrides qui seront commercialisés. La production d'hybrides ne se limite pas à l'obtention d'hybrides simples issus du croissement de deux lignées de maïs, et concerne également le croisement d'un hybride et d'une lignée (hybride trois voies) ou le croisement de deux hybrides (hybride double).

L'écimage, c'est-à-dire l'élimination de la panicule mâle sur les géniteurs femelles avant floraison, est ainsi une étape essentielle du processus de production de semences de maïs hybride. En effet la présence de pollen, même en faible quantité, entraine des autofécondations sur ces géniteurs femelles et une contamination dans la production d'hybrides. Cet écimage était traditionnellement réalisé manuellement et le coût en main d'oeuvre engendré par cette étape pesait de façon importante sur le coût de la production de semence hybride. On a ainsi cherché à mécaniser cette étape au moyen de différents outils, en particulier des outils à couteaux pour venir couper la cime des plantes et des outils a rouleaux pour venir arracher la panicule ou le cornet (ensemble des feuilles entourant la panicule).

Le processus de castration mécanique peut être réalisé soit avec un ou plusieurs passages de couteaux uniquement, soit en deux temps. Dans un premier temps, un passage aux couteaux est effectué sur les rangs géniteurs femelles : des lames tournantes coupent le sommet de la plante mâle. La hauteur de coupe idéale est située aux trois quarts du cornet, ou aux trois quarts de la panicule si celle-ci dépasse du cornet. Entre deux et cinq jours plus tard, lorsque la panicule a un peu repoussé (2 à 5 cm) mais avant qu'elle soit suffisamment ouverte pour émettre du pollen, un arrachage aux rouleaux ou aux pneus est réalisé. L'objectif est d'attraper la panicule avec les rouleaux ou les pneus en arrachant le moins possible le cornet ou les feuilles qui se trouveraient encore autour. Pour cela, il faut placer les rouleaux à la base de la panicule tout en restant au-dessus des feuilles. La première coupe aura eu pour conséquence l'égalisation de la taille de la culture de telle façon que la panicule qui a une croissance plus rapide que le restant de la plante dépasse du feuillage. L'objectif de la deuxième étape est d'arracher le reste de la panicule et d'éliminer ainsi tout risque d'autofécondation.

Au cours de ces opérations de castration mécanique, l'agriculteur évalue visuellement la hauteur de coupe optimale de la panicule, depuis la nacelle de sa machine et contrôle la hauteur des outils de coupe ou d'arrachage. Généralement, deux rangs contigus sont coupés simultanément à la même hauteur ce qui permet de gagner du temps mais risque de pénaliser la coupe d'un des deux rangs si les plantes ne sont pas de taille homogènes. La qualité de la coupe est donc limitée par la réactivité du conducteur mais aussi par la précision que permet l'architecture actuelle de la machine. En conséquence, de nombreuses panicules ne sont pas coupées à la bonne hauteur. A l'issue des deux étapes de la castration mécanique, seules 70% à 80% des panicules sont totalement éliminées.

Il est ensuite nécessaire de réaliser une opération de castration manuelle des panicules restantes (ou des parties restantes des panicules coupées lorsque la coupe n'a pas permis l'élimination totale de la panicule) afin de respecter les normes de pureté définies par le GNIS (Groupement National Interprofessionnel des Semences et plants) pour la production de maïs semence. Cette étape, fastidieuse est réalisée par des saisonniers et représente un coût pour le producteur.

Contrairement à la castration manuelle, dans tous les systèmes de castration mécanique actuellement disponibles, l'élimination de la panicule est indissociable de l'élimination de feuilles, notamment les feuilles du cornet. Cette élimination de matière végétale va pénaliser la plante dans son développement futur et va impacter le rendement final de la culture et donc la rémunération de l'agriculteur multiplicateur de semence.

L'amélioration des dispositifs de castration mécanique est un réel enjeu en machinisme agricole. Le but est d'optimiser l'arrachage de la panicule tout en minimisant l'élimination de végétation. Par ailleurs, une gestion automatisée de la coupe devrait permettre de libérer le conducteur de la machine de l'attention nécessaire au réglage de la coupe, et donc d'augmenter la vitesse d'évolution de la machine. Enfin l'amélioration de cette castration pourrait permettre de réduire les coûts associés à l'étape de vérification manuelle finale.

Dans cette optique, un système proposé par la SARL Duissard repose sur deux lots de cellules photoélectriques émettrices/réceptrices placés en amont des outils de coupe et situées à 13cm l'un en-dessous de l'autre, de part et d'autres de deux rangs. Ces cellules fonctionnent en détection directe : un faisceau infrarouge est émis par la cellule photoélectrique tandis qu'un réflecteur, situé en face, réfléchit le faisceau vers la cellule qui le réceptionne. Si du maïs se trouve sur le parcours du faisceau, alors celui-ci ne sera pas réceptionné par la cellule photoélectrique. La hauteur maximale est détectée lorsque la cellule inférieure voit du maïs (faisceau obstrué par le maïs donc non-perçu par la cellule inférieure) et que la cellule supérieure n'en voit pas (faisceau perçu par la cellule supérieure), à la précision près de l'écart entre les deux photocellules soit 13 cm. Ainsi, lorsque les deux cellules voient du maïs (les deux faisceaux sont obstrués) alors la hauteur de coupe est trop basse et un vérin s'allonge pour que le bras portant les outils de coupe remonte. A l'inverse, lorsque qu'aucune des deux cellules ne voient du maïs (les deux faisceaux sont réceptionnés par les cellules) alors la hauteur de coupe est trop haute et la tige du vérin rentre pour que le bras s'abaisse. L'installation d'une temporisation est nécessaire pour conserver la consigne pendant plusieurs secondes car le temps de détection et de l'envoi de la consigne sont trop brefs par rapport au temps nécessaire au déplacement du bras.

Ce système envoie ainsi une consigne « tout ou rien » à l'actionneur (montée ou descente) à cause de la présence de seulement deux photocellules. Le système tente donc en permanence d'ajuster la hauteur de coupe avec des consignes répétées et parfois contraires ce qui le sollicite fortement.

Par ailleurs dès que les cellules voient du vide, par exemple entre deux pieds de maïs, l'ensemble du bras va descendre pour devoir remonter aussitôt après au niveau du pied suivant. De même, à la fin d'un rang l'ensemble du système va descendre et probablement rater les premiers pieds du rang suivant.

Le degré de précision est par ailleurs limité par l'espacement vertical entre les deux lots de photocellules, soit 13 cm. Les cellules traitent en outre l'information pour deux rangs simultanément donc le pied de maïs du rang le plus bas sera coupé trop haut. Enfin, l'encombrement du système global reste un problème pour les agriculteurs. US-A-4 197 691 décrit un système robotique selon le préambule de la revendication 1.

## EXPOSÉ DE L'INVENTION

L'invention vise à améliorer les systèmes existants d'automatisation des opérations de coupe ou d'arrache de végétaux, et propose pour ce faire un système robotique pour une utilisation en agriculture, comprenant au moins un bras porte-outil destiné à porter un outil agricole et apte à être commandé pour permettre d'élever ou d'abaisser l'outil agricole, un capteur de mesure de hauteur de végétaux, et un calculateur configuré pour déterminer une consigne de commande de l'au moins un bras porte-outil à partir de mesures réalisées par le capteur de mesure de hauteur de végétaux, caractérisé en ce que le bras porte-outil est relié à un organe de liaison permettant son installation sur un bras de manoeuvre équipant un véhicule agricole, et en ce que le calculateur est en outre configuré pour déterminer une consigne de commande du bras de manoeuvre permettant d'élever ou d'abaisser le bras porte-outil à partir de mesures réalisées par le capteur de mesure de hauteur de végétaux.

Certains aspects préférés mais non limitatifs de ce système sont les suivants :

- il comprend au moins deux bras porte-outil reliés à l'organe de liaison, chaque bras porte-outil étant associé à un rang de culture, et le calculateur est configuré pour :

  ◦ déterminer la consigne de commande de chacun des bras porte-outil à partir de mesures de hauteur des végétaux présents dans le rang associé au bras porte-outil ;
  ◦ calculer une consigne intermédiaire de commande du bras de manoeuvre pour chacun des rangs à partir de mesures de hauteur des végétaux présents dans chacun des rangs ; et
  ◦ moyenner les consignes intermédiaires calculées pour chacun des rangs pour déterminer la consigne de commande du bras de manoeuvre ;

- l'au moins un bras porte-outil présente un débattement dont l'amplitude est inférieure à celle du débattement du bras de manoeuvre ;
- le calculateur est configuré pour déterminer la consigne de commande de l'au moins un bras porte-outil sur la base de mesures de hauteur de végétaux présents sur une première distance en amont de la position actuelle de l'outil agricole dans la direction de trajet du véhicule, et pour déterminer la consigne de commande du bras de manoeuvre sur la base de mesures de hauteur de végétaux présents sur une deuxième distance en amont de la position actuelle de l'outil agricole dans la direction de trajet du véhicule, la deuxième distance étant supérieure à la première distance ;

- le capteur de mesure de hauteur est un appareil à rideau de lumière ou un système d'imagerie stéréoscopique ;
- l'outil agricole est un outil de coupe ou d'arrachage de végétaux, en particulier de maïs.

L'invention s'étend également à un équipement de véhicule agricole comprenant un bras de manoeuvre et le système selon l'invention préinstallé sur le bras de manoeuvre par l'intermédiaire de l'organe de liaison, ainsi qu'à un véhicule doté d'un tel équipement.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- Les figures 1 et 2 sont des vues schématiques d'un système selon un mode de réalisation possible de l'invention, respectivement de côté et en perspective ;
- la figure 3 est un schéma d'un modèle simplifié d'un système selon un mode de réalisation possible de l'invention.

## EXPOSÉ DÉTAILLÉ DE MODES DE RÉALISATION PARTICULIERS

Dans la description ci-après, les termes « avant » et « arrière » doivent être compris comme relatifs à une direction d'avancement d'un véhicule agricole. Il en est de même des termes « longitudinal » et « transversal », la direction d'avancement s'effectuant longitudinalement. Enfin les termes « horizontal » et « vertical » doivent être compris comme relatifs à un sol parfaitement plat sur lequel progresserait le véhicule agricole.

L'invention porte sur un système robotique pour une utilisation en agriculture. Elle s'applique d'une manière générale à tout domaine où un ajustement de hauteur d'un outil agricole est nécessaire, notamment pour des outils de coupe ou d'arrachage de végétaux tels que ceux utilisés pour la castration de maïs ou pour la récolte céréalière.

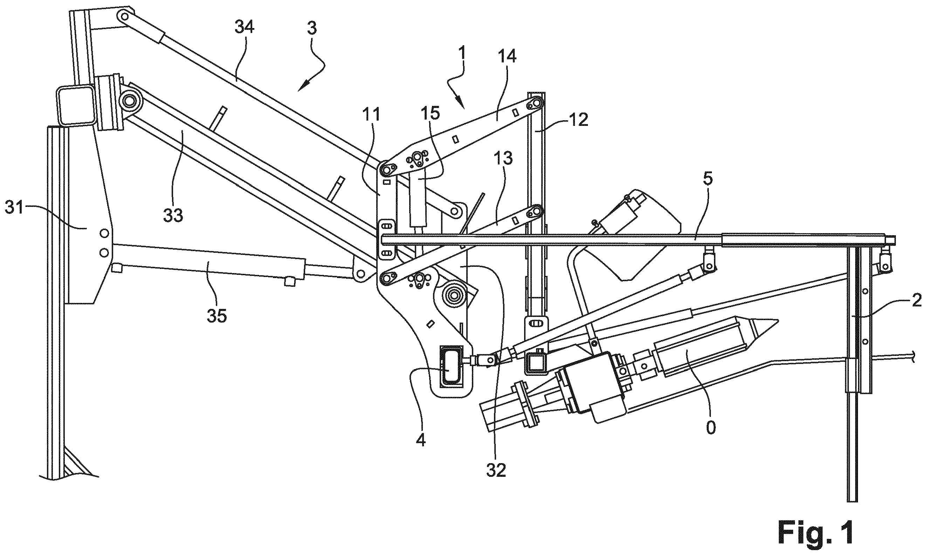

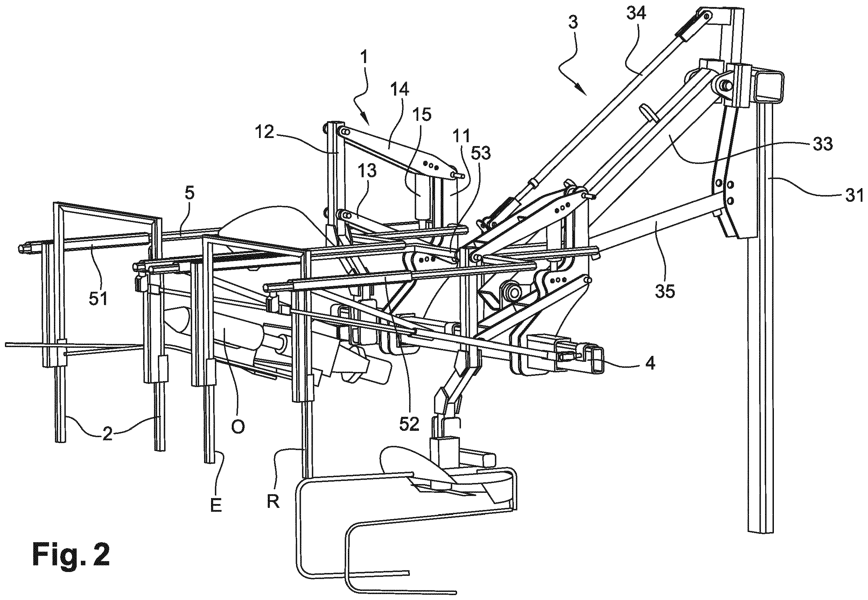

En référence aux figures 1 et 2, l'invention porte sur un système robotique qui comprend au moins un bras porte-outil 1 destiné à porter un outil agricole et apte à être commandé pour permettre d'élever et d'abaisser l'outil agricole, un capteur de mesure de hauteur de végétaux 2, et un calculateur configuré pour déterminer une consigne de commande du bras porte-outil à partir de mesures réalisées par le capteur de mesure de hauteur de végétaux.

L'outil agricole O est typiquement un outil de coupe (par exemple un outil de coupe à couteaux) ou d'arrachage (par exemple à pneus ou à rouleaux) de végétaux. Un tel outil comprend généralement un instrument de coupe ou d'arrachage (couteaux, pneus ou rouleaux), un moteur d'entraînement de l'instrument, un guide de végétation et un carter de protection.

Dans le cadre de l'invention, le bras porte-outil 1 est relié à un organe de liaison 4 permettant son installation sur un bras de manoeuvre 3 équipant un véhicule agricole. Le calculateur est en outre configuré pour, à partir de mesures réalisées par le capteur de mesure de hauteur de végétaux 2, déterminer une consigne de commande du bras de manoeuvre 3 permettant d'élever ou d'abaisser le bras porte-outil 1.

Pour la castration du maïs, le véhicule agricole utilisé est un enjambeur qui permet de circuler entre les rangs de maïs et de couper ou arracher plusieurs rangs géniteurs femelles contigus à la fois. Un enjambeur comporte généralement deux ou quatre bras de manoeuvre en amont du véhicule, chaque bras de manoeuvre portant deux outils de coupe ou d'arrachage afin de castrer simultanément deux rangs contigus, ce qui permet de gagner du temps. Dans un mode de réalisation possible de l'invention représenté sur la figure 2, le système comprend ainsi deux bras porte-outils pouvant être installés via un organe de liaison sur un même bras de manoeuvre du véhicule agricole. L'invention n'est bien entendu pas limitée par le nombre de bras porte-outils pouvant être conjointement installés sur un même bras de manoeuvre.

Un bras de manoeuvre 3 est classiquement un bras en parallélogramme qui comprend, comme représenté sur les figures 1 et 2, un montant vertical arrière 31 formant la connexion structurelle principale avec le véhicule agricole, et un montant vertical avant 32 à l'extrémité inférieure duquel peut être monté l'organe de liaison 4 relié au(x) bras porte-outil 1. Les montants verticaux 31 et 32 sont reliés entre eux par des montants de liaison 33 et 34 montés de manière pivotante par rapport au montant vertical arrière 31. Un vérin 35 est monté entre le montant vertical arrière 31 et le montant de liaison 33, et fournit un moyen d'ajuster, par pivotement du montant de liaison 33 par rapport au montant vertical arrière 31, la hauteur de l'extrémité avant du montant de liaison 33, et par là la hauteur du montant vertical avant 32 et donc de l'organe de liaison 4 du ou des bras porte-outil 1.

Chaque bras porte-outil 1 peut également être un bras en parallélogramme qui comprend un montant vertical arrière 11 monté sur l'organe de liaison 4, et un montant vertical avant 12 à l'extrémité inférieure duquel peut être monté un outil agricole O. Le montant vertical arrière 11 de chaque bras porte-outil 1 est rendu solidaire du montant vertical avant 32 du bras de manoeuvre 3 par l'intermédiaire de l'organe de liaison 4. En variante, plutôt que d'être actionnés via un parallélogramme de démultiplication, les bras porte-outil 1 peuvent être actionnés en attaque directe.

Revenant au cas d'un bras en parallélogramme, les montants verticaux 11 et 12 d'un bras porte-outil 1 sont reliés entre eux par des montants de liaison 13 et 14 montés de manière pivotante par rapport au montant vertical arrière 11. Un vérin 15 est monté entre le montant vertical arrière 11 et le montant de liaison 14, et fournit un moyen d'ajuster, par pivotement du montant de liaison 14 par rapport au montant vertical arrière 11, la hauteur de l'extrémité avant du montant de liaison 15, et par là la hauteur du montant vertical avant 12 et de l'outil agricole O.

Comme représenté sur la figure 2, deux bras porte-outils peuvent être montés sur l'organe de liaison 4, ce dernier pouvant prendre la forme d'une barre de liaison montée à l'extrémité inférieure du montant vertical avant 32 du bras de manoeuvre 3. Les deux bras porte-outils sont plus précisément agencés sur l'organe de liaison 4 de manière à ce que les outils portés par chacun des bras porte-outil puissent assurer la coupe ou l'arrachage de deux rangs adjacents.

On prévoit un capteur de mesure de hauteur de végétaux 2 apte à réaliser la mesure de la hauteur des végétaux présents dans un rang de culture. Le calculateur reçoit les mesures de hauteur réalisées pour chacun des rangs, et détermine la hauteur à laquelle chacun des outils doit être placé.

Le calculateur est de préférence configuré pour déterminer une consigne de commande du bras de manoeuvre 3 permettant de réaliser un positionnement des outils à une hauteur moyenne à laquelle le ou les outils doivent être placés. La masse embarquée par le bras de manoeuvre est importante (il porte notamment deux bras porte-outils et deux outils) et ses déplacements sont donc peu rapides. Mais les variations de hauteur du bras manoeuvrable sont relativement faibles.

Une consigne de commande est par ailleurs fournie de manière individuelle à chacun des bras-porte-outils par le calculateur, permettant d'ajuster individuellement la hauteur d'un outil et donc d'individualiser la coupe ou l'arrachage par rang. Chacun des bras porte-outil vient ainsi positionner l'outil à la hauteur optimale de coupe ou d'arrachage de chaque pied d'un rang, telle que déterminée grâce à une stratégie de coupe ou d'arrachage dont des exemples sont détaillés plus loin. La masse embarquée par un bras porte-outil est relativement faible, et son déplacement est plus rapide que celui du bras de manoeuvre, ce qui permet de s'adapter aux variations de hauteur plante à plante qui peuvent être relativement importantes (typiquement des variations comprises entre - 200 mm et + 200 mm le long d'un rang).

On prévoit ainsi que le bras porte-outil présente un débattement de plus faible amplitude que le débattement du bras de manoeuvre. Le bras de manoeuvre, doté d'un grand débattement, a effectivement pour rôle de se placer automatiquement à la hauteur moyenne à laquelle le ou les outils doivent être placés, tandis que le bras porte-outil, de plus faible débattement mais plus rapide, assure la coupe ou de l'arrachage d'un rang.

En ayant recours à deux bras (bras porte-outil et bras de manoeuvre) pour assurer le positionnement des outils, il est possible d'ajuster le bras manoeuvrable, doté d'un plus grand débattement et plus lent, à une hauteur moyenne et d'utiliser un bras porte-outil, doté d'un plus petit débattement et plus rapide, pour s'ajuster précisément et rapidement à la hauteur de chaque pied. En permettant une coupe ou un arrachage optimisé, cette architecture mécanique permet ainsi d'améliorer la rentabilité des opérations de castration mécanique. L'arrachage de la panicule s'effectue en effet sans élimination excessive de végétation qui pourrait avoir un impact négatif sur le rendement. Le nombre de panicules restantes à arracher à la main se voit en outre particulièrement réduit. L'automatisation du positionnement des outils permet par ailleurs au conducteur d'être déchargé de cette tâche, moyennant quoi la vitesse d'évolution de la machine peut être augmentée.

Le système selon l'invention présente en outre l'avantage de pouvoir être installé sur des bras de manoeuvre de divers modèles de véhicules agricoles existantes. L'invention s'étend également à un équipement de véhicule agricole comprenant un bras de manoeuvre et le système décrit précédemment préinstallé sur le bras de manoeuvre par l'intermédiaire de l'organe de liaison.

Dans un mode de réalisation possible représenté sur les figures 1 et 2, le capteur de mesure de hauteur de végétaux 2 est un appareil à rideau de lumière composé d'un émetteur E sous la forme d'une colonne de sources lumineuses, et d'un récepteur R sous la forme d'une colonne de photorécepteurs. L'émetteur E et le récepteur R sont montés de manière à se faire face et à s'étendre selon leur direction longitudinale perpendiculairement au sol pour permettre de mesurer la hauteur de végétaux présents entre eux. Chaque source lumineuse de l'émetteur E est ainsi apte à émettre un faisceau, par exemple dans l'infrarouge, en direction du photorécepteur qui lui fait face.

L'émetteur E et le récepteur R sont chacun portés par un châssis 5 monté sur le montant vertical arrière 11 du bras porte-outil 1 qui est solidaire du montant vertical avant 32 du bras de manoeuvre 3. Ce châssis 5 peut comporter deux portants longitudinaux 51, 52 reliés à une barre transversale 53 depuis laquelle ils s'étendent vers l'avant. Chacun des portants longitudinaux 51, 52 peut supporter, par exemple à son extrémité avant, un élément vertical apte à permettre le montage de l'émetteur E ou du récepteur R et l'ajustement de leur hauteur par rapport au châssis. Le châssis 5 est dimensionné pour permettre la mesure de hauteur d'un unique rang de culture entre l'émetteur et le récepteur du capteur de mesure de hauteur de végétaux. La longueur des portants longitudinaux 51, 52 est de préférence ajustable afin de régler la distance séparant le rideau de lumière E, R de l'outil O.

Le fait d'avoir recours à un émetteur E sous la forme d'une colonne de sources lumineuses et d'un récepteur R sous la forme d'une colonne de photorécepteurs permet de multiplier les capteurs en amont de l'outil agricole ce qui autorise l'élaboration d'une consigne de montée ou de descente des bras 1, 3 non pas « tout ou rien » mais au contraire précise et quantifiée.

Un exemple de capteur de mesure de hauteur pouvant être utilisé dans le cadre de l'invention est un rideau lumineux de mesure A-GAGE™ EZ-ARRAY™ proposé par la société Turck Banner. On peut notamment choisir un capteur dont la hauteur de rideau est de 600 mm avec une résolution de 5 mm, le balayage s'effectuant de bas en haut en 9,3 ms au maximum.

On relèvera que ce capteur présente l'avantage de ne pas être perturbé par l'exposition solaire et les vibrations de la machine. Optionnellement, un dispositif de jet d'air comprimé lui est associé pour débarrasser la poussière ou des gouttes qui pourraient se déposer sur le capteur.

Ce capteur présente l'avantage de proposer plusieurs modes de mesure, pour fournir différentes indications comme le premier faisceau obstrué, le dernier faisceau établi, le nombre total de faisceaux obstrués, etc. Le mode repérant le dernier faisceau obstrué peut être privilégié puisqu'il permet d'obtenir le profil de la plante en localisant la hauteur maximale de la plante à l'aide du rideau lumineux. Ainsi, dans un mode de réalisation de l'invention, le capteur de mesure de hauteur est configuré pour réaliser un balayage droit selon lequel tous les faisceaux entre une source lumineuse et un photorécepteur se faisant face sont balayés à tour de rôle depuis le faisceau le plus proche du sol, et pour fournir une indication relative au dernier faisceau bloqué.

Dans un autre mode de réalisation possible, le capteur de mesure de hauteur de végétaux est un capteur de vision, par exemple une caméra temps de vol ou un système d'imagerie stéréoscopique dont l'utilisation est décrite par la suite.

Le système d'imagerie stéréoscopique comprend deux caméras montées de manière à pouvoir imager, à partir de deux points de vue distants, une même scène située au-devant de l'outil agricole dans la direction de trajet du véhicule. Les deux caméras sont portées par une tête stéréoscopique.

Le système d'imagerie stéréoscopique comprend en outre une unité de traitement informatique configurée pour élaborer, à partir des images délivrées par les caméras, une reconstruction 3D représentative du relief de la scène imagée. L'unité de traitement informatique peut être déportée des caméras.

Les caméras du système d'imagerie stéréoscopique produisent au même instant deux photographies jumelles, appelées couple stéréoscopique, légèrement décalées spatialement. Celles-ci vont permettre de restituer le relief des plantes par la mise en oeuvre des étapes suivantes :

- étalonnage du système de prise de vue ;
- rectification des images ;
- mise en correspondance de points homologues entre les deux images (issus de la projection d'un même point de l'environnement) ;
- reconstruction du point 3D de l'environnement à partir des paires de points homologues.

La ligne de base entre les deux caméras étant supposée fixe, l'étape d'étalonnage est faite préalablement à la campagne de reconstruction et reste valable tant que la stabilité mécanique de la tête stéréoscopique est garantie. Les étapes suivantes sont réalisées à chaque instant pour produire une nouvelle reconstruction 3D de l'environnement pour prendre en compte un changement soit de la position du véhicule soit de la surface observée.

L'étape d'étalonnage peut être réalisée en observant un objet connu (une mire) sous différents angles et vu simultanément par les deux caméras. La mise en correspondance sur chaque paire d'images de plusieurs points caractéristiques de la mire permet d'estimer la matrice de projection de chaque caméra (paramètres intrinsèques) ainsi que la transformation géométrique reliant les deux caméras (paramètres extrinsèques).

Les paramètres issus de l'étalonnage permettent d'appliquer une fonction de rectification qui aligne les lignes de la caméra gauche avec celles de la caméra droite. Cette opération permet d'accélérer et de rendre plus robuste l'appariement entre les points des deux images correspondant à un même point 3D. La transformation choisie doit veiller à préserver la qualité du signal contenu dans l'image (minimisation du lissage et de l'interpolation). Un exemple de ce type d'algorithme est présenté dans l'article de Loop et Chang, intitulé « Computing rectifying homographies for stereo vision » Int. Conférence CVPR, 1999

Une fois les deux images rectifiées, une mise en correspondance des deux images fournies par les caméras est alors réalisée dont le but est de retrouver les points homologues entre les deux images, c'est-à-dire les projections des mêmes points de la scène imagée. On identifie ainsi qu'un point p1 dans l'image gauche et qu'un point p2 dans l'image droite sont la projection d'un même point P de la scène imagée. Les coordonnées X, Y, Z de ce point P peuvent alors être calculées.

Pour ce faire, la première image est parcourue et pour chaque pixel de cette image, on recherche dans la deuxième image acquise au même instant le pixel correspondant au même point physique. Grâce à la rectification, ce pixel se trouve sur la même ligne de la deuxième image que le pixel d'origine de la première image. Cette contrainte réduit les temps de recherche et les risques d'erreur. Pour effectuer la recherche, on considère un voisinage du pixel d'origine et on recherche le long de la ligne le pixel ayant le voisinage le plus ressemblant. Différents scores de corrélation ont été proposés dans la littérature, compromis entre qualité et rapidité. Cette recherche est itérée pour tous les pixels de la ligne de l'image d'origine, puis à l'ensemble des lignes de cette même image. Des contraintes d'ordre entre appariements successifs ainsi que des algorithmes dits « globaux » permettent de consolider les appariements réalisés en éliminant les résultats aberrants. Pour chaque appariement, on peut sauvegarder la distance entre les colonnes des deux pixels appariés : on parle de disparité, cette disparité étant linéairement liée à la profondeur du point 3D correspondant.

Au cours de la dernière étape, pour chaque appariement réalisé entre les deux images et en utilisant la connaissance des paramètres d'étalonnage du système, on peut reconstruire par triangulation le point 3D correspondant. Pour tous les appariements réalisés entre les deux images, on reconstruit un ensemble de points 3D dont les coordonnées sont exprimées dans le repère d'une des caméras (ou dans un repère arbitraire rigidement lié à une des caméras).

En orientant la tête stéréoscopique vers les rangs de maïs, les points 3D reconstruits correspondent à des points de la « canopée ». On peut ainsi reconstruire une surface s'appuyant sur ces points 3D reconstruits et ainsi modéliser la scène imagée. Une fois reconstruite, cette surface peut être analysée pour déterminer les lignes de crêtes reliant les sommets des pieds appartenant à un même rang et les vallées correspondant à l'espace inter-rangs. De plus, pour faciliter la recherche de ces zones de courbures maximales, la surface 3D reconstruite étant exprimée dans le repère de la tête stéréoscopique et pouvant donc être exprimée dans le repère du véhicule, les lignes de crête et les vallées recherchées sont dans une direction parallèle au déplacement du véhicule.

En fonction de la largeur du champ de vue de la tête stéréoscopique, plusieurs rangs peuvent être imagés simultanément. Le système d'imagerie stéréoscopique peut ainsi être adapté pour permettre d'imager et de mesurer simultanément la hauteur de plusieurs rangs de culture.

La reconstruction 3D fournit ainsi une information représentative du relief de la scène imagée sous forme matricielle en lignes et colonnes où chaque point de la matrice fournit une information représentative de la distance entre le système d'imagerie stéréoscopique (plus précisément le point milieu entre les caméras sur la ligne de base) et le sommet des végétaux présents dans la scène imagée.

L'unité de traitement informatique peut être configurée pour identifier pour chaque ligne ou portion de ligne de la reconstruction 3D le point le plus élevé, ou calculer pour chaque ligne ou portion de ligne de la reconstruction 3D la moyenne des points présents sur la ligne ou portion de ligne, de manière à fournir l'information de mesure de hauteur sur un rang de culture.

Les caméras du système d'imagerie stéréoscopique peuvent être montées de manière à être fixes par rapport au véhicule agricole, en étant soit embarquées directement sur le véhicule, soit supportées par le bras de manoeuvre. En variante, elles peuvent être montées de manière à être fixes par rapport au bras porte-outil, en étant par exemple positionnées sur son montant vertical avant 12.

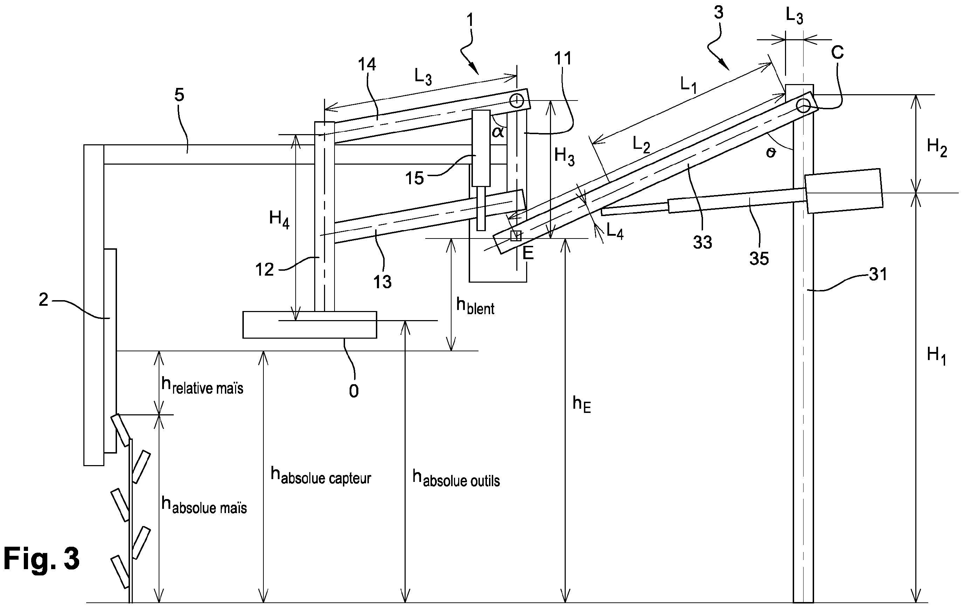

Un modèle simplifié des bras 1, 3 avec un outil O et le capteur de mesure de hauteur 2 du premier mode de réalisation (rideau de lumière) est proposé en figure 3. Dans ce qui suit, on présente ainsi une méthode de détermination des consignes de commande à l'aide d'une mesure de hauteur du maïs réalisée par un rideau de lumière.

Pour calculer la hauteur absolue à laquelle se situe le point milieu du capteur $h_{absolue\ capteur}$, on utilise l'angle $\theta$, mesuré par exemple à l'aide d'un capteur de position angulaire C, entre le montant vertical arrière 31 et le montant de liaison 33 du bras de manoeuvre 3. On peut utiliser également des vérins intégrant une mesure de leur élongation. Par géométrie, on obtient la relation suivante :

$$h_E = H_1 + H_2 - L_2 \cos\theta \qquad (1)$$

On peut également déterminer la relation suivante :

$$h_{absolue\ maïs} = h_{absolue\ capteur} + h_{relative\ maïs} \qquad (2)$$
$$= h_E + H_{bLent-capteur} + h_{relative\ maïs}$$

Avec $H_{bLent-capteur}$ la différence de hauteur entre l'extrémité avant du montant de liaison 33 (point E) et le milieu du capteur de mesure de hauteur 2, et $h_{relative\ maïs}$ la hauteur relative du maïs par rapport au milieu du capteur de mesure de hauteur (valeur comprise entre -300 mm et +300 mm pour un rideau de lumière de longueur $L_{capteur}$ de 600mm).

Le capteur de mesure de hauteur 2 renvoie une tension $U_{capteur}$ entre $U_{capteur\ à\ vide}$, la tension du capteur à vide, et $U_{max\ capteur}$, la tension maximale du capteur (10V pour le capteur utilisé), proportionnelle à la hauteur du dernier faisceau obstrué par le maïs. La hauteur relative du maïs $h_{relative\ maïs}$ grâce à la formule :

$$h_{relative\ maïs} = \frac{L_{capteur}}{U_{max\ capteur} - U_{capteur\ à\ vide}}(U_{capteur} - U_{capteur\ à\ vide}) - 0,5\ L_{capteur} \qquad (3)$$

Des calculs similaires sont applicables dans le cas où un capteur de vision est employé en substitution du rideau de lumière. Ces calculs sont à adapter suivant que le capteur de vision est solidaire du bras porte-outil, du bras de manoeuvre ou du véhicule.

Une fois la hauteur du maïs déterminée pour chaque rang, le calculateur détermine les consignes de commande des bras pour chaque rang, ce qui consiste à déterminer, pour chaque rang, la hauteur de l'outil $h_{absolue\ outils}$ pour le bras porte-outil 1, et la hauteur $h_E$ de l'extrémité avant du montant de liaison 33 du bras de manoeuvre 3.

Lorsque le bras de manoeuvre 3 supporte plusieurs bras porte-outil, la consigne de commande du bras de manoeuvre peut être la moyenne des consignes $h_E$ déterminées pour chaque rang. Ainsi, lorsque le système comprend au moins deux bras porte-outil reliés à l'organe de liaison, chaque bras porte-outil étant associé à un rang de culture, le calculateur est alors configuré pour :

- déterminer la consigne de commande de chacun des bras porte-outil à partir de mesures de hauteur des végétaux présents dans le rang associé au bras porte-outil ;
- calculer une consigne intermédiaire de commande du bras de manoeuvre pour chacun des rangs à partir de mesures de hauteur des végétaux présents dans chacun des rangs ; et
- moyenner les consignes intermédiaires calculées pour chacun des rangs pour déterminer la consigne de commande du bras de manoeuvre, après éventuel filtrage des consignes intermédiaires pour éviter des mouvements inutiles.

Par la suite, on a grâce à l'équation (1) l'angle $\theta$ à asservir :

$$\theta = \text{acos}\left[\frac{1}{L_2}(H_1 + H_2 - h_E)\right]$$

$$(4)$$

Enfin, on note que :

$$h_{absolue\ outils} = h_E + H_3 - L_3 \cos \alpha - H_4$$

$$(5)$$

D'où la relation suivante fixant l'ange $\alpha$ à asservir entre le montant arrière 11 et le montant de liaison 14 du bras porte-outil :

$$\alpha = \text{acos}\left[\frac{1}{L_3}\left(h_E + H_3 - H_4 - h_{absolue\ outils}\right)\right]$$

$$(6)$$

Selon différentes réalisations possible de l'invention, dans l'équation (6) on peut considérer $h_E$ comme étant issu du calcul de la consigne de commande du bras de manoeuvre, ou comme étant la hauteur du point E utilisé au moment du calcul (soit $H_1 + H_2 - L_2 \cos \theta$, avec $\theta$ la mesure de l'angle obtenu par le capteur de position angulaire).

On détaille ci-après différentes stratégies d'élaboration des consignes de commande des bras 1, 3.

L'objectif de la coupe aux couteaux est de dégager la vue sur le rang en coupant juste assez de feuilles et de panicules pour que ces dernières puissent encore repousser par la suite. La coupe doit donc être relativement homogène, sans créer trop d'irrégularités. La hauteur de coupe idéale de la panicule se situe aux trois quarts de celle-ci. Ceci suppose de repérer la hauteur de la base et du sommet de la panicule pour en repérer les trois quarts, ce qui est difficilement reproductible avec des capteurs, étant donné que la panicule peut être cachée au sein du cornet. Par ailleurs, imposer une hauteur de coupe à un certain nombre de centimètres en dessous du sommet du pied n'est pas adapté car la panicule peut aussi bien être proche de ce sommet que beaucoup plus basse. Il est donc nécessaire d'obtenir une mesure relative, adaptée à chaque pied de maïs et à différentes architectures de plantes (port dressé, feuilles retombantes,...).

Lors de l'arrachage, il est nécessaire d'enlever toutes les panicules qui ont repoussé. Comme les panicules repoussent plus vite que les feuilles, l'objectif est que la hauteur des feuilles reste relativement homogène afin que dépassent les panicules. Pour cela, il faut limiter les variations brusques de hauteur lors de la coupe afin de pouvoir ensuite suivre ces variations lors de l'arrachage. Pour l'arrachage, il est nécessaire de venir placer les rouleaux ou les pneus au plus près de la cime des feuilles afin d'arracher les panicules qui dépassent sans enlever trop de feuilles.

Plusieurs stratégies peuvent donc être envisagées selon leur pertinence pour la coupe ou l'arrachage. Chaque stratégie peut reposer sur le fait que le temps écoulé entre deux acquisitions du capteur de mesure de hauteur est converti en distance parcourue grâce à la vitesse calculée à chaque instant.

Le rideau de lumière étant situé en amont du des outils (de manière similaire, un capteur de vision vient imager une scène située en amont du ou des outils), la consigne à envoyer aux actionneurs des vérins 15, 35 à un instant t n'est pas calculée grâce à l'acquisition du capteur à ce même instant t mais grâce aux acquisitions antérieures. Ainsi, les acquisitions sont mémorisées au fur et à mesure puis la consigne est calculée à partir d'un petit échantillon d'acquisitions, la première acquisition étant située à une distance $d_{Offset}$ de l'acquisition actuelle. La consigne est ensuite calculée à partir des acquisitions comprises sur une distance $d_{Ech}$ et qui correspondent aux acquisitions des plantes se trouvant actuellement au niveau des outils.

Les consignes envoyées sont ainsi calculées à partir de mesures antérieures réalisées alors que le capteur de mesure parcourait la distance $d_{Ech}$ ou imageait la canopée sur la distance $d_{Ech}$ dans la direction de trajet du véhicule en amont de la position actuelle du ou des outils.

Ainsi, le système selon l'invention peut comprendre en outre une mémoire dans laquelle sont enregistrées les mesures réalisées par le capteur de mesure de hauteur, et le calculateur peut être configuré pour fournir les consignes de commande sur la base de mesures précédemment enregistrées dans la mémoire et correspondant aux acquisitions portant sur les plantes que l'on retrouvent sur une distance $d_{Ech}$ en amont de la position actuelle du ou des outils.

Dans le cadre de ce mode de réalisation, il importe de connaître précisément la vitesse de déplacement du véhicule afin de travailler non pas en temps écoulé mais en distance parcourue. Pour ce faire, le système peut comprendre un capteur de mesure de la vitesse d'avancement dans la direction de trajet du véhicule, et le calculateur est alors configuré pour déterminer la distance parcourue le long de la direction de trajet entre deux mesures successivement réalisées par le capteur de mesure de hauteur. En d'autres termes, il est possible d'horodater les échantillons en mémoire avec la vitesse instantanée, pour ensuite permettre de déterminer, au moment du calcul des consignes, quels sont les échantillons correspondant aux acquisitions portant sur la distance $d_{Ech}$ dans la direction de trajet du véhicule en amont de la position actuelle du ou des outils (plus ou moins d'échantillons selon que le déplacement est rapide ou lent).

Le capteur de mesure de la vitesse d'avancement peut être constitué d'un capteur inductif de proximité associé à une roue en plastique fixée dans la jante d'une roue du véhicule et sur le pourtour de laquelle des pions métalliques sont agencés. A chaque passage devant un pion métallique, le signal en sortie du capteur est modifié. Ainsi, la vitesse d'avancement peut être déduite en calculant le temps écoulé entre deux fronts montants du signal de sortie, c'est-à-dire entre deux pions métalliques, connaissant la longueur de la corde entre ces deux points.

Dans un mode de réalisation, on considère une distance $d_{Ech}$ plus importante pour le bras de manoeuvre (équivalente par exemple à la distance entre 4 à 6 plantes) que pour le bras porte-outil (équivalente par exemple à la distance entre 2 à 4 plantes). En effet, l'objectif du bras porte-outil est d'individualiser la coupe ou l'arrachage, en tendant vers un traitement spécifique plante à plante, tandis que le bras manoeuvrable sert simplement à s'ajuster à une hauteur moyenne à laquelle le ou les outils doivent se placer. Ainsi, dans ce mode de réalisation, le calculateur est configuré pour déterminer la consigne de commande d'au moins un bras porte-outil sur la base de mesures de hauteur de végétaux présents sur une première distance en amont de la position actuelle d'au moins un outil agricole dans la direction de trajet du véhicule, et pour déterminer la consigne de commande du bras de manoeuvre sur la base de mesures de hauteur de végétaux présents sur une deuxième distance en amont de la position actuelle de l'au moins un outil agricole dans la direction de trajet du véhicule, la deuxième distance étant supérieure à la première distance.

Le calcul des consignes à partir des mesures de la hauteur absolue du maïs $h_{absolue\ maïs}$ peut être réalisé de différentes manières selon la stratégie choisie.

Dans un mode de réalisation, le calculateur est configuré pour déterminer une consigne de commande d'un bras à partir de la moyenne desdites mesures précédemment réalisées par le capteur de mesure de hauteur sur une distance prédéterminée $d_{Ech}$.

Ce mode de réalisation correspond à une stratégie dite « moyenne » selon laquelle pour les acquisitions de $d_{Ech}$, on calcule la hauteur moyenne du maïs. La consigne envoyée est ensuite égale à cette hauteur moyenne à laquelle on peut soustraire une hauteur $h_{Offset}$ qui dépend de la variété coupée. Cette stratégie a pour avantage d'englober les vides entre deux pieds. Elle est destinée à être utilisée pour la coupe aux couteaux.

Dans un autre mode de réalisation, le calculateur est configuré pour déterminer une consigne de commande d'un bras à partir du maxima desdites mesures précédemment réalisées par le capteur de mesure de hauteur sur une distance prédéterminée $d_{Ech}$.

Ce mode de réalisation correspond à une stratégie dite « maximum » selon laquelle pour les acquisitions de $d_{Ech}$, on repère la hauteur maximale parmi les hauteurs de maïs sur cet échantillon. La consigne envoyée est ensuite égale à cette hauteur maximale à laquelle on peut soustraire une hauteur $h_{Offset}$ qui dépend de la variété coupée. Cette stratégie est plutôt destinée à l'arrachage aux rouleaux. Il a effectivement pu être vérifié que les panicules mesurant environ 10 mm de diamètre ne sont pas détectables par le rideau de lumière, seules les feuilles sont détectées en dessinant un profil relativement rectiligne suite à la coupe aux couteaux. L'objectif est donc ici de venir placer les rouleaux juste au sommet de ce profil, sachant que tout ce qui dépasse ne peut être que la panicule et sera donc arraché.

Dans encore un autre mode de réalisation, le calculateur est configuré pour calculer une densité foliaire indiquant, pour chaque intervalle de hauteur d'un ensemble d'intervalles successifs, le pourcentage de mesures parmi lesdites mesures réalisées par le capteur de mesure de hauteur sur une distance prédéterminée $d_{Ech}$ qui présentent une hauteur supérieure à la borne inférieure de l'intervalle de hauteur, et pour déterminer une consigne de commande d'un bras à partir de la borne inférieure de l'intervalle de hauteur correspondant à un pourcentage seuil.

Ce mode de réalisation correspond à une stratégie dite « densité foliaire » selon laquelle pour les acquisitions de $d_{Ech}$, la hauteur minimale parmi les hauteurs de maïs sur cet échantillon est identifiée. Puis une boucle est créée qui définit une hauteur courante égale à la hauteur minimale incrémentée de 5 mm par exemple à chaque tour de boucle et le pourcentage d'acquisitions qui correspondent à une hauteur supérieure à cette nouvelle hauteur courante est calculé. Ainsi, pour la hauteur minimale de l'échantillon, 100% des acquisitions de l'échantillon ont une hauteur supérieure à la hauteur minimale. Puis au fur et à mesure que la hauteur courante augmente, de moins en moins d'acquisitions ont une hauteur supérieure à la hauteur courante. Ce pourcentage correspond à ce que l'on appelle une densité foliaire. On définit un seuil à partir duquel on estime que la densité foliaire est suffisamment faible pour correspondre à la hauteur optimale de coupe : en effet, plus on se rapproche du sommet de la plante, plus la densité foliaire est supposée diminuer. On relèvera que réciproquement la densité foliaire peut être estimée en partant de la hauteur maximale et en venant vérifier le pourcentage d'acquisitions présentant une hauteur inférieure.

La consigne envoyée est ensuite égale à la hauteur courante correspondant à ce seuil S, à laquelle on peut soustraire une hauteur $h_{Offset}$ qui dépend de la variété coupée. Cette stratégie est destinée à être utilisée pour la coupe aux couteaux. Elle se rapproche davantage de la mesure idéale des trois quarts de panicules : en effet, on imagine qu'à cette hauteur idéale il n'y a plus qu'un certain pourcentage de feuilles. De plus, elle prend en compte l'architecture de la plante : pour une variété à feuilles retombantes, il y aura davantage de feuilles autour de la panicule que pour une variété à port dressé.

Dans le cadre de l'invention, chacune des consignes de commande (celle du ou des bras porte-outils et celle du bras de manoeuvre) peut être élaborée en appliquant une stratégie avec un paramétrage qui lui est propre. On utilise de préférence la même stratégie pour chacune des consignes avec les même valeurs pour $h_{Offset}$, mais en considérant une distance $d_{Ech}$ plus importante pour le bras de manoeuvre que pour le ou les bras porte-outils. La distance $d_{Offset}$ peut également être plus faible pour le bras de manoeuvre que pour le ou les bras porte-outil.

L'invention n'est pas limitée au système tel que précédemment décrit mais s'étend également à un véhicule, notamment un enjambeur, doté d'un ou plusieurs bras de manoeuvre dont l'un au moins est équipé du système selon l'invention.

Elle s'étend également à un procédé d'ajustement de la hauteur d'un outil agricole au moyen d'un système selon l'invention, comprenant les étapes :

- d'acquisition de mesures du capteur de mesure de hauteur de végétaux ;
- de détermination d'une consigne de commande d'au moins un bras porte-outil à partir des mesures acquises ;
- de détermination d'une consigne de commande du bras de manoeuvre à partir des mesures acquises.


**Revendications**

**1.** Système robotique pour une utilisation en agriculture, comprenant au moins un bras porte-outil (1) destiné à porter un outil agricole (O) et apte à être commandé pour permettre d'élever ou d'abaisser l'outil agricole, un capteur (2) de mesure de hauteur de végétaux, et un calculateur configuré pour déterminer une consigne de commande de l'au moins un bras porte-outil à partir de mesures réalisées par le capteur de mesure de hauteur de végétaux, **caractérisé en ce que** le bras porte-outil (1) est relié à un organe de liaison (4) permettant son installation sur un bras de manoeuvre (3) équipant un véhicule agricole, et **en ce que** le calculateur est en outre configuré pour déterminer une consigne de commande du bras de manoeuvre (3) permettant d'élever ou d'abaisser le bras porte-outil à partir de mesures réalisées par le capteur de mesure de hauteur de végétaux.

**2.** Système selon la revendication 1, comprenant au moins deux bras porte-outil reliés à l'organe de liaison, chaque bras porte-outil étant associé à un rang de culture, et dans lequel le calculateur est configuré pour :

- déterminer la consigne de commande de chacun des bras porte-outil à partir de mesures de hauteur des végétaux présents dans le rang associé au bras porte-outil ;
- calculer une consigne intermédiaire de commande du bras de manoeuvre pour chacun des rangs à partir de mesures de hauteur des végétaux présents dans chacun des rangs ; et
- moyenner les consignes intermédiaires calculées pour chacun des rangs pour déterminer la consigne de commande du bras de manoeuvre.

**3.** Système selon l'une des revendications 1 et 2, dans lequel l'au moins un bras porte-outil présente un débattement dont l'amplitude est inférieure à celle du débattement du bras de manoeuvre.

**4.** Système selon l'une des revendications 1 à 3, dans lequel le calculateur est configuré pour déterminer la consigne de commande de l'au moins un bras porte-outil sur la base de mesures de hauteur de végétaux présents sur une première distance en amont de la position actuelle de l'outil agricole dans la direction de trajet du véhicule, et pour déterminer la consigne de commande du bras de manoeuvre sur la base de mesures de hauteur de végétaux présents sur une deuxième distance en amont de la position actuelle de l'outil agricole dans la direction de trajet du véhicule, la deuxième distance étant supérieure à la première distance.

**5.** Système selon la revendication 4, comprenant en outre un capteur de mesure de la vitesse d'avancement dans la direction de trajet du véhicule, et dans lequel le calculateur est en outre configuré pour déterminer la distance parcourue le long de la direction de trajet entre deux mesures successivement réalisées par le capteur de mesure de hauteur.

**6.** Système selon l'une des revendications 4 et 5, dans lequel le calculateur est configuré pour déterminer les consignes de commande de l'au moins un bras porte-outil et du bras de manoeuvre à partir de la moyenne desdites mesures de hauteur de végétaux.

**7.** Système selon l'une des revendications 4 et 5, dans lequel le calculateur est configuré pour déterminer les consignes de commande de l'au moins un bras porte-outil et du bras de manoeuvre à partir du maxima desdites mesures de hauteur de végétaux.

**8.** Système selon l'une des revendications 4 et 5, dans lequel le calculateur est configuré pour calculer une densité foliaire indiquant, pour chaque intervalle de hauteur d'un ensemble d'intervalles successifs, le pourcentage de mesures parmi lesdites mesures de hauteur de végétaux qui présentent une hauteur supérieure à la borne inférieure de l'intervalle de hauteur, et pour déterminer les consignes de commande de l'au moins un bras porte-outil et du bras de manoeuvre à partir de la borne inférieure d'un intervalle de hauteur correspondant à un pourcentage seuil.

**9.** Système selon l'une des revendications 1 à 8, dans lequel le capteur de mesure de hauteur (2) est un appareil à rideau de lumière composé d'un émetteur (E) sous la forme d'une colonne de sources lumineuses et d'un récepteur (R) sous la forme d'une colonne de photorécepteurs, l'émetteur et le récepteur étant montés de manière à se faire face et à s'étendre selon leur direction longitudinale perpendiculairement au sol pour permettre de mesurer la hauteur de végétaux présents entre eux.

**10.** Système selon l'une des revendications 1 à 8, dans lequel le capteur de mesure de hauteur est un système d'imagerie stéréoscopique comprenant deux caméras montées de manière à pouvoir imager, à partir de deux points de vue distants, une même scène située au-devant de l'outil agricole dans une direction de trajet du véhicule, et une unité de traitement informatique configurée pour élaborer, à partir des images délivrées par les caméras, une reconstruction 3D représentative du relief de la scène imagée.

**11.** Système selon l'une des revendications 1 à 10, dans lequel l'outil agricole est un outil de coupe ou d'arrachage de végétaux, en particulier de maïs.

**12.** Equipement de véhicule agricole comprenant un bras de manoeuvre (3) et le système selon l'une des revendications 1 à 11 préinstallé sur le bras de manoeuvre par l'intermédiaire de l'organe de liaison (4).

**13.** Véhicule doté d'un équipement selon la revendication 12.

14. Procédé d'ajustement de la hauteur d'un outil agricole (O) au moyen d'un système selon l'une des revendications 1 à 11, comprenant les étapes :

- d'acquisition de mesures du capteur de mesure de hauteur de végétaux,
- de détermination d'une consigne de commande de l'au moins un bras porte-outil à partir des mesures acquises ;
- de détermination d'une consigne de commande du bras de manoeuvre à partir des mesures acquises.

**Patentansprüche**

1. Robotersystem zur Verwendung in der Landwirtschaft, enthaltend zumindest einen Geräteträgerarm (1), der dazu bestimmt ist, ein landwirtschaftliches Gerät (O) zu tragen, und der so gesteuert werden kann, dass das landwirtschaftliche Gerät angehoben oder abgesenkt werden kann, einen Sensor (2) zum Messen der Höhe von Pflanzen und einen Rechner, der dazu ausgelegt ist, um einen Steuersollwert des zumindest einen Geräteträgerarms aus Messungen zu bestimmen, die von dem Sensor zum Messer der Höhe von Pflanzen durchgeführt werden, **dadurch gekennzeichnet, dass** der Geräteträgerarm (1) mit einem Verbindungsorgan (4) verbunden ist, das seine Montage an einem Betätigungsarm (3) ermöglicht, mit dem ein landwirtschaftliches Fahrzeug ausgestattet ist, und dadurch, dass der Rechner ferner dazu ausgelegt ist, um einen Steuersollwert des Betätigungsarms (3) zum Anheben oder Absenken des Geräteträgerarms ausgehend von von dem Sensor zum Messen der Höhe von Pflanzen durchgeführten Messungen zu bestimmen.

2. System nach Anspruch 1, enthaltend zumindest zwei Geräteträgerarme, die mit dem Verbindungsorgan verbunden sind, wobei jeder Geräteträgerarm einer Erntereihe zugeordnet ist und der Rechner ausgelegt ist zum

- Bestimmen des Steuersollwerts eines jeden der Geräteträgerarme ausgehend von Messungen der Höhe der Pflanzen, die in der dem Geräteträgerarm zugeordneten Reihe vorhanden sind;
- Berechnen eines Zwischensteuersollwerts des Betätigungsarms für jede der Reihen ausgehend von Messungen der Höhe der Pflanzen, die in jeder der Reihen vorhanden sind; und
- Mitteln der für jede der Reihen berechneten Zwischensollwerte, um den Steuerwollwert des Betätigungsarms zu bestimmen.

3. System nach einem der Ansprüche 1 und 2, wobei der zumindest eine Geräteträgerarm eine Auslenkung aufweist, deren Amplitude geringer als die der Auslenkung des Betätigungsarms ist.

4. System nach einem der Ansprüche 1 bis 3, wobei der Rechner dazu ausgelegt ist, den Steuersollwert des zumindest einen Geräteträgerarms auf Grundlage von Messungen der Höhe der Pflanzen zu bestimmen, die in einer ersten Entfernung vor der aktuellen Position des landwirtschaftlichen Geräts in Fahrtrichtung des Fahrzeugs vorhanden sind, und den Steuerwollwert des Betätigungsarms auf Grundlage von Messungen der Höhe der Pflanzen zu bestimmen, die in einer zweiten Entfernung vor der aktuellen Position des landwirtschaftlichen Geräts in Fahrtrichtung des Fahrzeugs vorhanden sind, wobei die zweite Entfernung größer ist als die erste Entfernung.

5. System nach Anspruch 4, ferner enthaltend einen Sensor zum Messen der Fahrtgeschwindigkeit in Fahrtrichtung des Fahrzeugs, wobei der Rechner ferner dazu ausgelegt ist, die in Fahrtrichtung zwischen zwei von dem Höhenmesssensor durchgeführten, aufeinanderfolgenden Messungen zurückgelegte Entfernung zu bestimmen.

6. System nach einem der Ansprüche 4 und 5, wobei der Rechner dazu ausgelegt ist, die Steuersollwerte des zumindest einen Geräteträgerarms und des Betätigungsarms ausgehend von dem Mittelwert der Messungen der Höhe der Pflanzen zu bestimmen.

7. System nach einem der Ansprüche 4 und 5, wobei der Rechner dazu ausgelegt ist, die Steuersollwerte des zumindest einen Geräteträgerarms und des Betätigungsarms ausgehend von dem Maximalwert der Messungen der Höhe der Pflanzen zu bestimmen.

8. System nach einem der Ansprüche 4 und 5, wobei der Rechner dazu ausgelegt ist, eine Blattdichte zu berechnen, die für jedes Höhenintervall einer Reihe von aufeinanderfolgenden Intervallen den Prozentsatz an Messungen aus den Messungen der Höhe der Pflanzen angibt, die eine Höhe über der unteren Grenze des Höhenintervalls aufweisen, und die Steuersollwerte des zumindest einen Geräteträgerarms und des Betätigungsarms ausgehend von der unteren Grenze eines Höhenintervalls zu bestimmen, das einem Schwellenprozentsatz entspricht.

9. System nach einem der Ansprüche 1 bis 8, wobei der Höhenmesssensor (2) eine Vorrichtung mit Lichtvorhang ist, die aus einem Sender (E) in Form einer Kolonne von Lichtquellen und einem Empfänger (R) in Form einer Kolonne von Lichtempfängern besteht, wobei der Sender und der Empfänger so angebracht sind, dass sie sich gegenüberliegen und in ihrer Längsrichtung senkrecht zum Boden erstrecken, um das Messen der Höhe von zwischen ihnen vorhandenen Pflanzen zu gestatten.

10. System nach einem der Ansprüche 1 bis 8, wobei der Höhenmesssensor ein stereoskopisches Bildgebungssystem ist, das zwei Kameras enthält, die so angebracht sind, dass sie ausgehend von zwei beabstandeten Blickpunkten eine gleiche Szenerie vor dem landwirtschaftlichen Gerät in einer Fahrtrichtung des Fahrzeugs abbilden können, sowie eine Datenverarbeitungseinheit, die dazu ausgelegt ist, ausgehend von den von den Kameras bereitgestellten Bildern eine für das Relief der abgebildeten Szenerie repräsentative 3D-Rekonstruktion zu erstellen.

11. System nach einem der Ansprüche 1 bis 10, wobei das landwirtschaftliche Gerät ein Gerät zum Abschneiden bzw. Ausreißen von Pflanzen, insbesondere von Mais, ist.

12. Einrichtung für landwirtschaftliche Fahrzeuge, enthaltend einen Betätigungsarm (3) und das System nach einem der Ansprüche 1 bis 11, das an dem Betätigungsarm über das Verbindungsorgan (4) vormontiert ist.

13. Fahrzeug mit einer Einrichtung nach Anspruch 12.

14. Verfahren zum Anpassen der Höhe eines landwirtschaftlichen Geräts (O) mittels eines Systems nach einem der Ansprüche 1 bis 11, umfassend die Schritte:

    - Erfassen von Messungen des Sensors zum Messen der Höhe von Pflanzen,
    - Bestimmen eines Steuersollwerts des zumindest einen Gerätträgerarms ausgehend von den erfassten Messungen;
    - Bestimmen eines Steuersollwerts des Betätigungsarms ausgehend von den erfassten Messungen.

## Claims

1. A robotic system for use in agriculture, comprising at least one tool-carrying arm (1) intended to carry an agricultural tool (O) and capable of being controlled to enable the agricultural tool to be raised or lowered, a plant height measuring sensor (2), and a calculator configured to determine a setpoint for controlling the at least one tool-carrying arm from measurements made by the plant height measuring sensor, **characterised in that** the tool-carrying arm (1) is connected to a connection member (4) for loading it on a handling arm (3) provided on an agricultural vehicle, and **in that** the calculator is further configured to determine a setpoint for controlling the handling arm (3) enabling the tool-carrying arm to be raised or lowered from measurements made by the plant height measuring sensor.

2. The system according to claim 1, including at least two tool-carrying arms connected to the connection member, each tool-carrying arm being associated with a crop row, and wherein the calculator is configured to:

    - determine the setpoint for controlling each of the tool-carrying arms from height measurements of the plants present in the row associated with the tool-carrying arm;
    - calculate an intermediate setpoint for controlling the handling arm for each of the rows from height measurements of the plants present in each of the rows; and
    - average the intermediate setpoints calculated for each of the rows to determine the setpoint for controlling the handling arm.

3. The system according to one of claims 1 and 2, wherein the at least one tool-carrying arm has a clearance the amplitude of which is lower than that of the handling arm clearance.

4. The system according to one of claims 1 to 3, wherein the calculator is configured to determine the setpoint for controlling the at least one tool-carrying arm based on height measurements of plants present over a first distance upstream of the current position of the agricultural tool in the vehicle path direction, and to determine the setpoint for controlling the handling arm based on height measurements of plants present over a second distance upstream of the current position of the agricultural tool in the vehicle path direction, the second distance being higher than the first distance.

5. The system according to claim 4, further comprising a rate of advance measuring sensor in the vehicle path direction, and wherein the calculator is further configured to determine the distance travelled along the path direction between two measurements successively made by the height measuring sensor.

6. The system according to one of claims 4 and 5, wherein the calculator is configured to determine the setpoints for controlling the at least one tool-carrying arm and the handling arm from the average of said plant height measurements.

7. The system according to one of claims 4 and 5, wherein the calculator is configured to determine the setpoints for controlling the at least one tool-carrying arm and the handling arm from the maximum of said plant height measurements.

8. The system according to one of claims 4 and 5, wherein the calculator is configured to calculate a leaf density indicating, for each height interval of a set of successive intervals, the percentage of measurements among said plant height measurements which have a height higher than the lower bound of the height interval, and to determine the setpoints for controlling the at least one tool-carrying arm and the handling arm from the lower bound of a height interval corresponding to a threshold percentage.

9. The system according to one of claims 1 to 8, wherein the height measuring sensor (2) is a light curtain apparatus made of an emitter (E) in the form of a column of light sources and a receiver (R) in the form of a column of photoreceptors, the emitter and receiver being mounted so as to face each other and extend along their longitudinal direction perpendicular to the ground to enable the height of plants present therebetween to be measured.

10. The system according to one of claims 1 to 8, wherein the height measuring sensor is a stereoscopic imaging system comprising two cameras mounted so as to be able to image, from two distant points of view, a same scene located in front of the agricultural tool in a vehicle path direction, and a computing processing unit configured to make up, from the images delivered by the cameras, a 3D reconstruction representative of the relief of the scene imaged.

11. The system according to one of claims 1 to 10, wherein the agricultural tool is a plant cutting or pulling tool, in particular for maize.

12. An agricultural vehicle piece of equipment comprising a handling arm (3) and the system according to one of claims 1 to 11 pre-loaded on the handling arm through the connection member (4).

13. A vehicle provided with a piece of equipment according to claim 12.

14. A method for adjusting the height of an agricultural tool (O) by means of a system according to one of claims 1 to 11, comprising the steps of:

- acquiring measurements from the plant height measuring sensor,
- determining a setpoint for controlling the at least one tool-carrying arm from the measurements acquired;
- determining a setpoint for controlling the handling arm from the measurements acquired.

Fig. 1

**Fig. 2**

EP 3 322 277 B1

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4197691 A

**Littérature non-brevet citée dans la description**

- **LOOP ; CHANG.** Computing rectifying homographies for stereo vision. *Int. Conférence CVPR,* 1999